# EUROPEAN PATENT APPLICATION

(11) **EP 4 379 145 A1**
(43) Date of publication of application: **05.06.2024**
(21) Application number: 22901362.8
(22) Date of filing: 30.11.2022
(51) Int. Cl.: E02F 3/43

(54) **WHEEL LOADER**

(30) Priority: 01.12.2021 JP 2021195418
(71) Applicant: Hitachi Construction Machinery Co., Ltd., Tokyo 110-0015 (JP)
(72) Inventor: TSUTSUMI, Yoshiaki, Tsuchiura-shi, Ibaraki 300-0013 (JP); MORIKI, Hidekazu, Tsuchiura-shi, Ibaraki 300-0013 (JP); IMURA, Shinya, Tsuchiura-shi, Ibaraki 300-0013 (JP)
(74) Representative: Manitz Finsterwald Patent- und Rechtsanwaltspartnerschaft mbB
(86) International application number: PCT/JP2022/044184
(87) International publication number: WO 2023/100930

(57) **Abstract**

Provided is a wheel loader allowing a load to be sufficiently mounted into a bucket regardless of the size and properties of a work object and an operation performed before the start of excavation. In a wheel loader 1 with an excavation support controller 5 for autonomously controlling a working device 2, in a case where a bucket 23 is tilted forward more than that in a predetermined posture, the excavation support controller 5 keeps outputting a command signal relating to a lifting operation to a lift arm solenoid control valve 481 and also outputs a command signal relating to a tilt operation to a bucket solenoid control valve 482 until the bucket 23 is in the predetermined posture, and in a case where the bucket 23 reaches the predetermined posture, outputs a command signal relating to a full tilt operation to the bucket solenoid control valve 482.

## Description

### TECHNICAL FIELD

The present invention relates to a wheel loader with an autonomous excavation control system.

### BACKGROUND ART

In recent years, for the purpose of improving work efficiency, a wheel loader with a controller for controlling the operations of a working device to perform an excavation work has been available. The controller determines that the wheel loader is ready to start the excavation work, and then, instead of the manipulations of an operation device by an operator, outputs command signals relating to a lifting operation of a lift arm and a raising operation of a bucket (also referred to as a tilt operation or a cloud operation) to a drive circuitry of the working device to cause the working device to operate.

For example, Patent Literature 1 discloses a wheel loader with a controller configured to generate a command signal based on a tilt operation speed of a bucket, a driving amount of a bucket cylinder, and a preset time, and in this wheel loader, the bucket starts and ends a tilt operation in accordance with the command signal generated in the controller. Thus, according to the wheel loader of Patent Literature 1, excavation can be performed in a track with a bucket operation amount assumed in advance.

Furthermore, in the wheel loader according to Patent Literature 2, the controller autonomously causes a tilt operation (autonomous tilt operation) of a bucket to be started based on a bottom pressure of a lift arm cylinders and a vehicle speed, and ends the autonomous tilt operation of the bucket based on the amount of the bottom pressure of the lift arm cylinders increased from the bottom pressure at the time when the bucket started the autonomous tilt operation. Thus, according to the wheel loader of Patent Literature 2, the working device can be controlled based on the magnitude of the traction force.

### CITATION LIST

### PATENT LITERATURE

Patent Literature 1: US-A-2006-0245896
Patent Literature 2: WO2015/004809

### SUMMARY OF INVENTION

### TECHNICAL PROBLEM

In the pile as a work object of a wheel loader, the angle of repose which is an angle formed between the slope and the horizontal plane differs depending on the properties of the constituent elements thereof such as earth and sand and minerals. However, in the wheel loader according to Patent Literature 1, the bucket operates in the track assumed in advance from the start to the end of the excavation work, and which leads to the possibility that a sufficient amount of the load cannot be scooped into the bucket depending on the angle of repose. For example, in the pile with the large angle of repose, the force acting from the pile (earth and sand, minerals, and the like) in the excavation work can be prevented from excessively becoming large by causing the bucket to be in the horizontal state or operated to be slightly tilted forward (toward the vehicle body) from the horizontal state. This allows the vehicle body to travel forward with causing the working device to raise upward, so that the bucket can be inserted deeper into the pile to scoop a large amount of the load. On the other hand, in the pile with the small angle of repose, the force acting from the pile (earth and sand, minerals, and the like) in the excavation work can be prevented from excessively becoming large by causing the bucket to be in the horizontal state or operated to be slightly dumped toward its front (in the direction away from the vehicle body) from the horizontal state. This allows the vehicle body to travel forward with causing the working device to raise upward, so that the bucket can be inserted deeper into the pile to scoop a large amount of the load. Moreover, even in the pile with the same angle of repose, the operation track differs depending on the initial posture of the working device, which leads to the possibility that the bucket cannot scoop a sufficient amount of the load in the excavation work.

On the other hand, in the wheel loader according to Patent Literature 2, the controller determines the start and the end of the excavation work based on the bottom pressure of the lift arm cylinders, and thus the operation track of the bucket changes depending on the angle of repose of the pile, which differs from the wheel loader according to Patent Literature 1. Thus, in the wheel loader according to Patent Literature 2, the bucket can scoop a sufficient amount of the load even if the angle of repose of the pile differs.

In causing a bucket to scoop the load, a wheel loader uses the reaction force from the pile against the driving force for the forward movement to move the load to the back side of the bucket. Accordingly, in the stages prior to the end of the excavation work, it is preferable that the bucket is in the posture of not being significantly tilted rearward. However, in the wheel loader according to Patent Literature 2, the controller determines the end of the excavation work based on the bottom pressure of the lift arm cylinders, and thus, for example, depending on the vehicle speed before the start of excavation and the hardness of the pile, there is a possibility that the bottom pressure of the lift arm cylinders has increased to a value close to the pressure corresponding to that of the end of the excavation work in the stages prior to the end of the excavation work. This may cause the bucket to be in the posture in which the bucket is largely tilted rearward (posture close to the full tilt state). In this case, the load cannot be sufficiently moved to the back side of the bucket by the bucket operation in the final stage of the excavation work, and thus is loaded on the tooth side (near the opening) of the bucket, which may cause the load to fall from the bucket during a transportation work after the excavation work.

Therefore, an object of the present invention is to provide a wheel loader allowing a load to be sufficiently mounted into a bucket regardless of the size and properties of a work object and an operation performed before the start of excavation.

### SOLUTION TO PROBLEM

In order to achieve the object described above, the present invention provides a wheel loader comprising: a lift arm attached to a front portion of a vehicle body, so as to rotate in an upward and downward direction with respect to the vehicle body; a bucket attached to a tip part of the lift arm, so as to excavate a work object by a tilt operation in which the bucket rotates in an upward direction with respect to the lift arm and tilts rearward toward the vehicle body; lift arm cylinders for driving the lift arm; a bucket cylinder for driving the bucket; a lift arm solenoid control valve configured to control the lift arm cylinders; a bucket solenoid control valve configured to control the bucket cylinder; and a controller configured to control the lift arm solenoid control valve and the bucket solenoid control valve, respectively, wherein the wheel loader comprises: a pressure sensor configured to detect a bottom pressure of the lift arm cylinders; and a bucket posture sensor configured to detect a posture of the bucket,
the controller is configured to: in a case where the bottom pressure detected by the pressure sensor reaches a first pressure threshold, output a command signal relating to a lift arm lifting operation to the lift arm solenoid control valve, the first pressure threshold corresponding to a bottom pressure of the lift arm cylinders in a state where the lift arm is not operating and also the bucket is touching the work object; in a case where the posture of the bucket detected by the bucket posture sensor is a posture in which the bucket is tilted forward more than that in a predetermined posture, keep outputting the command signal relating to the lift arm lifting operation to the lift arm solenoid control valve and also output a command signal relating to the tilt operation of the bucket to the bucket solenoid control valve until the bucket is in the predetermined posture; and in a case where the posture of the bucket detected by the bucket posture sensor reaches the predetermined posture, output a command signal relating to a full tilt operation of the bucket to the bucket solenoid control valve.

### ADVANTAGEOUS EFFECTS OF INVENTION

According to the present invention, it is possible to sufficiently mount a load into a bucket regardless of the size and properties of a work object and an operation performed before the start of excavation. The problems, configurations, and advantageous effects other than those described above will be clarified by explanation of the embodiment below.

### BRIEF DESCRIPTION OF DRAWINGS

[FIG. 1] FIG. 1 is a side view of the appearance of a wheel loader according to the embodiments of the present invention which exemplifies the structure of the wheel loader.
[FIG. 2] FIG. 2 is a perspective view of the wheel loader illustrated in FIG. 1 as viewed from the front left side.
[FIG. 3A] FIG. 3A illustrates a state where a bucket has hit and entered a pile in an excavation work performed by a wheel loader.
[FIG. 3B] FIG. 3B illustrates a state where a bucket is performing a tilt operation in an excavation work performed by a wheel loader.
[FIG. 3C] FIG. 3C illustrates a state where a lift arm has been raised in an excavation work performed by a wheel loader.
[FIG. 4] FIG. 4 is a system configuration diagram illustrating an exemplified configuration of a drive system of a wheel loader.
[FIG. 5] FIG. 5 is a functional block diagram illustrating the functions of an excavation support controller.
[FIG. 6] FIG. 6 illustrates a graph of a temporal change in an acceleration of a wheel loader at the start of an excavation work.
[FIG. 7] FIG. 7 illustrates a flowchart of a flow of processing executed by an excavation support controller.
[FIG. 8] FIG. 8 illustrates a flow X which is the continuation of the flowchart of FIG. 7.
[FIG. 9] FIG. 9 illustrates a flow Y which is the continuation of the flowchart of FIG. 8.
[FIG. 10] FIG. 10 schematically illustrates the initial posture of a working device while an excavation support controller executes the processing illustrated in FIG. 7 to FIG. 9.
[FIG. 11] FIG. 11 schematically illustrates the posture of a working device when the processing proceeds to YES in step S616 of FIG. 8.
[FIG. 12] FIG. 12 schematically illustrates the posture of a working device when the processing proceeds to YES in step S620 of FIG. 8.
[FIG. 13] FIG. 13 schematically illustrates the posture of a working device when the processing proceeds to YES in step S625 of FIG. 8.
[FIG. 14] FIG. 14 schematically illustrates the posture of a working device when the processing proceeds to YES in step S629 of FIG. 9.
[FIG. 15] FIG. 15 schematically illustrates the posture of a working device when the processing proceeds to YES in step S633 of FIG. 9.
[FIG. 16] FIG. 16 schematically illustrates the posture of a working device when the processing proceeds to YES in step S637 of FIG. 9.

### DESCRIPTION OF EMBODIMENTS

### (Overall structure of wheel loader 1)

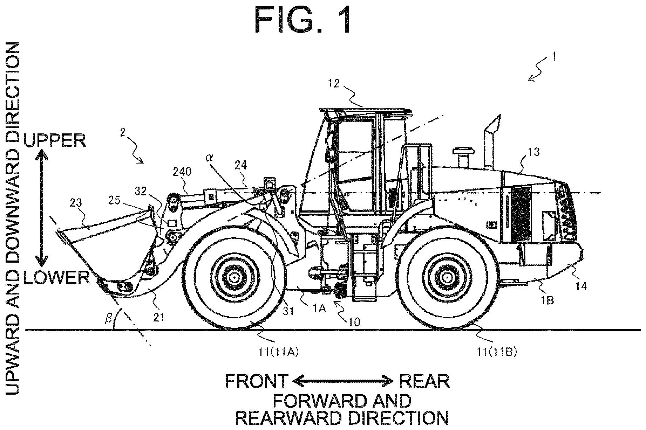

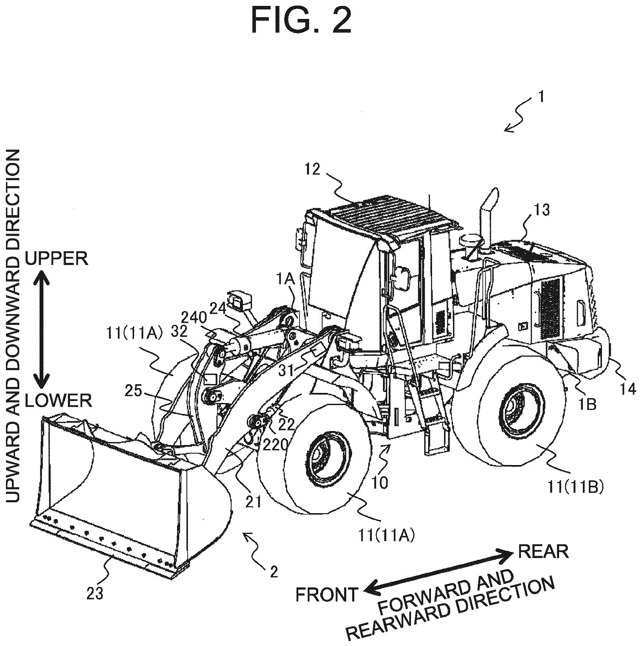

Firstly, the overall structure of a wheel loader 1 according to the embodiments of the present invention will be described with reference to FIG. 1 and FIG. 2.

FIG. 1 is a side view of the appearance of the wheel loader 1 according to the embodiment of the present invention which exemplifies the structure of the wheel loader 1. FIG. 2 is a perspective view of the wheel loader 1 illustrated in FIG. 1 as viewed from the front left side.

The wheel loader 1 is an articulated type work vehicle in which the vehicle body is bent and swiveled on its central portion and steered thereby. In the wheel loader 1, a front frame 1A serving as the front part of the vehicle body and a rear frame 1B serving as the rear part of the vehicle body are connected to each other by a center joint 10 to be swiveled in the left and right direction, which allows the front frame 1A to be bent in the left and right direction with respect to the rear frame 1B. In the following, in the left and right direction of the vehicle body, the left side direction relative to the forward direction is referred to as a "left direction" and the right side direction relative to the forward direction is referred to as a "right direction.

The vehicle body includes four wheels 11, and the two wheels 11 among them are provided, as front wheels 11A, on both the left and right sides of the front frame 1A, respectively, and the remaining two wheels 11 are provided, as rear wheels 11B, on both the left and right sides of the rear frame 1B, respectively. FIG. 1 illustrates, among the four wheels 11, only the front wheel 11A and rear wheel 11B provided on the left side, and FIG. 2 illustrates, among the four wheels 11, only the front wheels 11A provided on the left and right sides and the rear wheel 11B provided on the left side. The number of the wheels 11 to be provided on the vehicle body is not particularly limited.

On a front portion of the front frame 1A, a hydraulically driven working device 2 used for a loading work, in which a work object such as earth and sand and minerals is excavated and loaded onto a loading destination, such as a dump truck or a hopper, is provided.

The rear frame 1B includes an operator's cab 12 in which an operator is to get, a machine room 13 for accommodating the equipment necessary for driving the wheel loader 1, and a counterweight 14 for balancing the vehicle body with the working device 2 to prevent the vehicle body from being tilted. On the rear frame 1B, the operator's cab 12 is provided in the front thereof, the counterweight 14 is provided in the rear thereof, and the machine room 13 is provided between the operator's cab 12 and the counterweight 14.

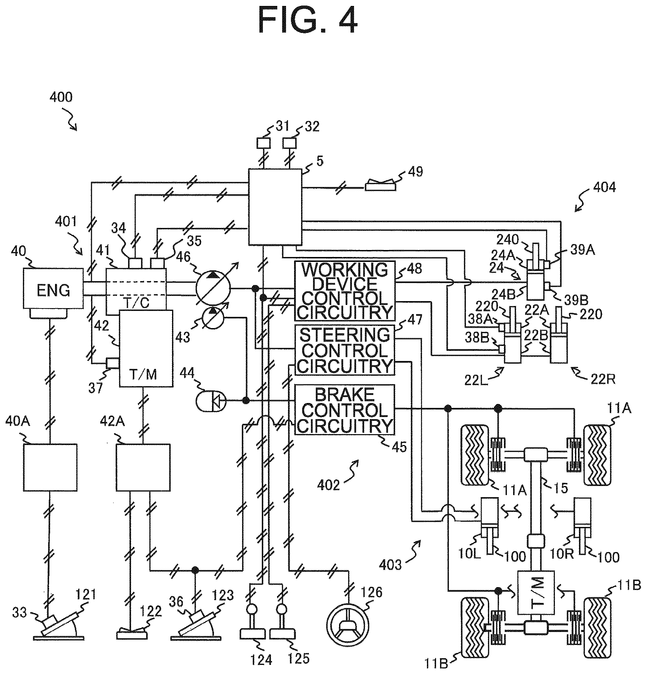

The working device 2 includes a lift arm 21 attached to the front frame 1A to be rotatable in the upward and downward direction, two lift arm cylinders 22L, 22R (see FIG. 4) as a hydraulic cylinder for driving the lift arm 21, a bucket 23 attached to the tip part of the lift arm 21 to be rotatable in the upward and downward direction, a bucket cylinder 24 as a hydraulic cylinder for driving the bucket 23, and a bell crank 25 rotatably connected to the lift arm 21 and serving as a link mechanism between the bucket 23 and the bucket cylinder 24.

The two lift arm cylinders 22L, 22R are arranged side by side in the left and right direction of the vehicle body with a predetermined space therebetween. However, in FIG. 1, the two lift arm cylinders 22L, 22R are not illustrated since they are arranged in the positions hidden by the front wheel 11A provided on the left side, and in FIG. 2, only the lift arm cylinder 22L on the left side is illustrated.

Extension of each of rods 220 of the two lift arm cylinders 22L, 22R causes the lift arm 21 to rotate in the upward direction with respect to the front frame 1A, and contraction of each of the rods 220 of the two lift arm cylinders 22L, 22R causes the lift arm 21 to rotate in the downward direction with respect to the front frame 1A. On a base end portion of the lift arm 21 (portion of the lift arm 21 which is attached to the front frame 1A), a lift arm sensor 31 for detecting a lift arm angle α that is an angle formed between the ground surface that the wheel loader 1 is touching (ground that the four wheels 11 are touching) and the lift arm 21. In this context, the lift arm sensor 31 is an aspect of a lift arm posture sensor for detecting the posture of the lift arm 21.

Extension of a rod 240 of the bucket cylinder 24 causes the bucket 23 to rotate in the upward direction with respect to the lift arm 21 and tilt rearwardly toward the front frame 1A (tilt operation), and contraction of the rod 240 of the bucket cylinder 24 causes the bucket 23 to rotate in the downward direction (dumping operation) with respect to the lift arm 21. This allows the bucket 23 to scoop the work object such as earth and sand and minerals and discharge (dump) it.

A bucket angle β that is an angle formed by the ground surface that the wheel loader 1 is touching and the bottom of the bucket 23 can be calculated based on the lift arm angle α and a bell crank angle γ that is a tilt angle of the bell crank 25 with respect to the front frame 1A. In this context, each of the lift arm sensor 31 for detecting the lift arm angle α and a bell crank sensor 32 attached to the bell crank 25 to detect the bell crank angle γ corresponds to a bucket posture sensor for detecting the posture of the bucket 23. Note that the bucket posture sensor does not necessarily have to be an angle sensor, but for example, may be a position sensor for detecting the position of the bucket 23, or the like.

The bucket 23 can be changed to various attachments such as a blade, which allows the wheel loader 1 to perform various works including, other than the loading work using the bucket 23, a snow removing work, a dozing work, and the like.

### (Excavation work)

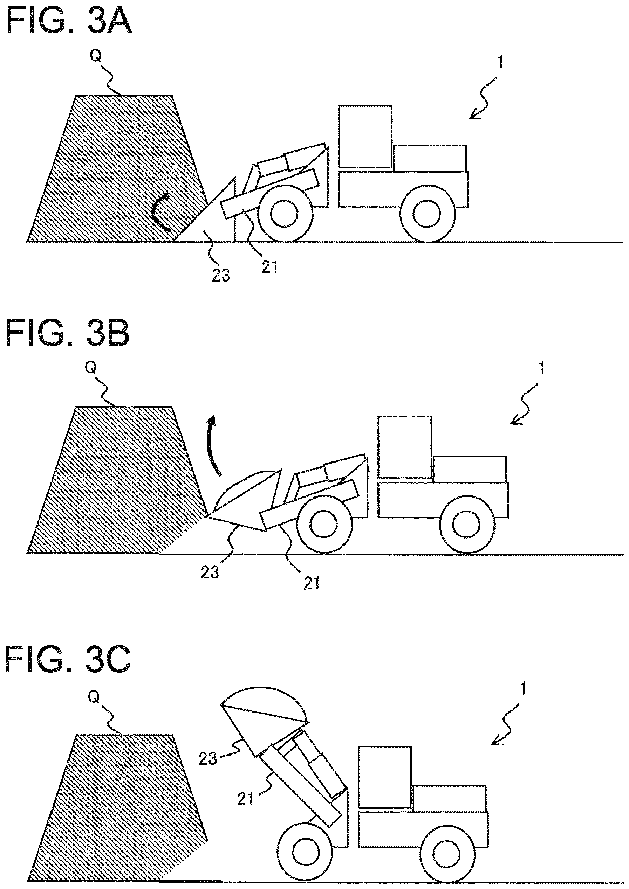

Next, the excavation work performed by the wheel loader 1 will be described with reference to FIG. 3A to FIG. 3C.

FIG. 3A to FIG. 3C are diagrams for explaining the excavation work performed by the wheel loader 1. FIG. 3A illustrates the state where the bucket 23 has hit and entered a pile Q, FIG. 3B illustrates the state where the bucket 23 is performing a tilt operation, and FIG. 3C illustrates the state where the lift arm 21 has been raised.

In the excavation work, firstly, the wheel loader 1 travels forward at full throttle toward the pile Q that is a work object, and causes the bucket 23 to hit and enter the pile Q (the state illustrated in FIG. 3A). Next, an operator manipulates the lift arm 21 to make it perform a lifting operation and manipulates the bucket 23 to make it perform a tilt operation, so that the wheel loader 1 can scoop up the earth and sand, minerals, and the like which make up the pile Q (the state illustrated in FIG. 3B). Then, the operator manipulates the lift arm 21 to make it keep performing the lifting operation, whereby the bucket 23 with the load that has been scooped up being loaded is raised further upward (the state illustrated in FIG. 3C).

Depending on the properties of the constituent elements that make up the pile Q, when being scooped up and placed into the bucket 23 (in the state illustrated in FIG. 3B), the load such as earth and sand and minerals may not be fully mounted to the back side of the bucket 23 by a single tilt operation of the bucket 23 provided by the operator. In this case, the operator provides the tilt operation of the bucket 23 over a plurality of times.

In the case of providing the tilt operation of the bucket 23 over a plurality of times, in the initial stage (for example, the first and second times), the reaction force from the pile Q against the driving force for the forward traveling which is output from the wheel loader 1 is used to move the load to the back side of the bucket 23, and thus the bucket 23 is preferably in the posture in which it is not largely tilted rearward toward the operator's cab 12. On the other hand, in the final stage of the tilt operation of the bucket 23, it is preferable to tilt the bucket 23 largely toward the operator's cab 12 to apply inertia rearwardly to the load, thereby making the load move toward the back side of the bucket 23.

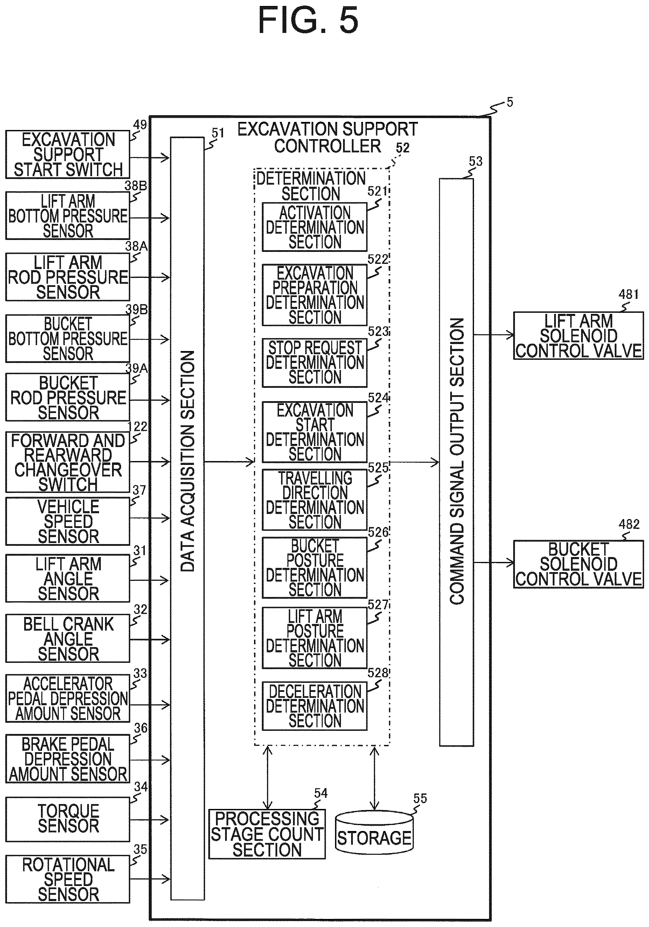

In the wheel loader 1, the excavation work can be performed not only by a manual operation in which an operator manipulates the working device 2 to operate, but also by an autonomous control technique for controlling the working device 2 using an excavation support controller 5 which will be described later (see FIG. 4 and FIG. 5).

### (Drive system 400 of wheel loader 1)

Next, a drive system 400 of the wheel loader 1 will be described with reference to FIG. 4.

FIG. 4 is a system configuration diagram illustrating an exemplified configuration of the drive system 400 of the wheel loader 1.

The drive system 400 of the wheel loader 1 includes a travelling drive system 401 for causing a vehicle body to travel, a brake drive system 402 for applying a brake force to the vehicle body during traveling, a steering drive system 403 for controlling the steering, and a work drive system 404 for causing the working device 2 to operate.

A rotational speed of an engine 40, which serves as a drive source of the travelling drive system 401, the brake drive system 402, the steering drive system 403, and the work drive system 404, is controlled by an engine controller 40A. The engine controller 40A outputs, to the engine 40, a control signal relating to a target engine speed based on the amount of depression of an accelerator pedal 121. The amount of depression of the accelerator pedal 121 is detected by an accelerator pedal depression amount sensor 33 attached to the accelerator pedal 121.

The travelling drive system 401 employs a torque converter system in the present embodiment, and includes a torque converter 41 connected to an output shaft of the engine 40 to amplify a torque transmitted from the engine 40, and a transmission 42 connected to an output shaft of the torque converter 41. The output shaft of the torque converter 41 is connected to a drive shaft 15 via the transmission 42, and the driving force output from the engine 40 is transmitted to the four wheels 11 via the torque converter 41, the transmission 42, and the drive shaft 15.

The torque converter 41 has the structure to amplify the driving force to be transmitted to the transmission 42 more as an input rotational speed (rotational speed of the output shaft of the engine 40) is higher than an output rotational speed. Accordingly, increasing the amount of depression of the accelerator pedal 121 to increase the rotational speed of the engine 40 causes the increase of the driving force to be output from the torque converter 41. The torque converter 41 is provided with a torque sensor 34 for detecting an output torque Tr of the torque converter 41 and a rotational speed sensor 35 for detecting an output rotational speed R of the torque converter.

The transmission 42 cuts off the connection between the output shaft of the torque converter 41 and the drive shaft 15 in accordance with a control signal output from a transmission controller 42A to reduce the driving force of the four wheels 11, or reverses the rotational direction of the drive shaft 15 to switch the direction of the driving force of the four wheels 11. The transmission controller 42A receives a switching signal output from the forward and rearward changeover switch 122, which is a forward and rearward switching device for switching the traveling of the vehicle body between forward and rearward movements, and a depression amount SB of a brake pedal 123 detected by a brake pedal depression amount sensor 36.

For example, the transmission controller 42A outputs, to the transmission 42, a control signal for cutting off the connection between the output shaft of the torque converter 41 and the drive shaft 15 when a switching signal output from the forward and rearward changeover switch 122 is a neutral signal relating to stop and also the depression amount detected by the brake pedal depression amount sensor 36 is equal to or more than a predetermined amount of depression.

On the output side of the transmission 42A, a vehicle speed sensor 37 for detecting the rotational speed of the drive shaft 15 to detect the vehicle speed is provided. The vehicle speed sensor 37 can also detect an acceleration based on the vehicle speed. That is, the vehicle speed sensor 37 is an aspect of an acceleration sensor for detecting an acceleration of the wheel loader 1.

The brake drive system 402 includes a brake pump 43 connected to the output shaft of the engine 40, an accumulator 44 for accumulating the pressure oil discharged from the brake pump 43, and a brake control circuitry 45 for controlling the brake force of the four wheels 11. In the brake control circuitry 45, the control pressure for controlling the brake force of the four wheels 11 is adjusted based on the amount of depression of the brake pedal 123 detected by the brake pedal depression amount sensor 36.

The steering drive system 403 includes left and right steering cylinders 10L, 10R for controlling the steering in the left and right direction in accordance with the extension and contraction of rods 100, a main pump 46 connected to the output shaft of the engine 40 to supply the pressure oil to the left and right steering cylinders 10L, 10R, and a steering control circuitry 47 for controlling the left and right steering cylinders 10L, 10R based on an operation amount and operation direction of a steering wheel 126.

The steering control circuitry 47 includes a steering direction control valve for controlling the flow (direction and flow rate) of the pressure oil discharged from the main pump 46 and supplied to the left and right steering cylinders 10L, 10R, respectively, and a steering solenoid control valve for controlling the steering direction control valve based on a steering signal output from the steering wheel 126. The steering solenoid control valve controls the steering direction control valve to control the left and right steering cylinders 10L, 10R.

For example, when the operator turns the steering wheel 126 to the right, the steering control circuitry 47 connects the discharge side of the main pump 46 with a bottom chamber of the left steering cylinder 10L based on a turn-right steering signal output from the steering wheel 126, and also connects the discharge side of the main pump 46 with a rod chamber of the right steering cylinder 10R.

This causes the pressure oil discharged from the main pump 46 to flow into the bottom chamber of the left steering cylinder 10L and the rod chamber of the right steering cylinder 10R, respectively, and the rod 100 of the left steering cylinder 10L to extend and the rod 100 of the right steering cylinder 10R to contract, which thus causes the wheel loader 1 to turn right.

On the other hand, when the operator turns the steering wheel 126 to the left, the steering control circuitry 47 connects the discharge side of the main pump 46 with a rod chamber of the left steering cylinder 10L based on a turn-left steering signal output from the steering wheel 126, and also connects the discharge side of the main pump 46 with a bottom chamber of the right steering cylinder 10R.

This causes the pressure oil discharged from the main pump 46 to flow into the rod chamber of the left steering cylinder 10L and the bottom chamber of the right steering cylinder 10R, respectively, and the rod 100 of the left steering cylinder 10L to contract and the rod 100 of the right steering cylinder 10R to extend, which thus causes the wheel loader 1 to turn left.

The work drive system 404 includes the two lift arm cylinders 22L, 22R, the bucket cylinder 24, the main pump 46 for supplying the pressure oil to the two lift arm cylinders 22L, 22R and the bucket cylinder 24, and a working device control circuitry 48 for controlling the flow of the pressure oil supplied from the main pump 46 to the two lift arm cylinders 22L, 22R and the bucket cylinder 24, respectively, based on an operation amount and operation direction of a lift arm operation lever 124 and those of a bucket operation lever 125.

The flow rate of the pressure oil discharged from the main pump 46 increases as the rotational speed of the output shaft of the engine 40 increases, and thus increasing the amount of depression of the accelerator pedal 121 to increase the rotational speed of the output shaft of the engine 40 causes the increase of the speed of expansion and contraction of the rods 220 of the two lift arm cylinders 22L, 22R and the rod 240 of the bucket cylinder 24. Note that, in FIG. 4, the steering drive system 403 and the work drive system 404 shares the main pump 46, however, they do not necessarily have to use the same hydraulic pump and may be separately provided with hydraulic pumps, respectively.

The working device control circuitry 48 includes a lift arm direction control valve for controlling the flow of the pressure oil discharged from the main pump 46 and supplied to the two lift arm cylinders 22L, 22R, respectively, a lift arm solenoid control valve 481 (see FIG. 5) for controlling the lift arm direction control valve based on a lift arm manipulation signal output from the lift arm operation lever 124, a bucket direction control valve for controlling the flow of the pressure oil discharged from the main pump 46 and supplied to the bucket cylinder 24, and a bucket solenoid control valve 482 (see FIG. 5) for controlling the bucket direction control valve based on a bucket manipulation signal output from the bucket operation lever 125.

The lift arm solenoid control valve 481 controls the lift arm directional control valve to control the two lift arm cylinders 22L, 22R. In the same manner, the bucket solenoid control valve 482 controls the bucket direction control valve to control the bucket cylinder 24.

For example, when the operator manipulates the lift arm operation lever 124 to raise the lift arm 21, the working device control circuitry 48 connects the main pump 46 with bottom chambers 22B of the two lift arm cylinders 22L, 22R, respectively, based on a lift arm raising manipulation signal output from the lift arm operation lever 124.

This causes the pressure oil discharged from the main pump 46 to flow into the bottom chambers 22B of the two lift arm cylinders 22L, 22R, respectively, and the rods 220 to extend, respectively, which thus causes the lift arm 21 to operate in the upward direction.

Furthermore, for example, when the operator manipulates the bucket operation lever 125 to tilt the bucket 23, the working device control circuitry 48 connects the main pump 46 with a bottom chamber 24B of the bucket cylinder 24 based on a tilt manipulation signal output from the bucket operation lever 125.

This causes the pressure oil discharged from the main pump 46 to flow into the bottom chamber 24B of the bucket cylinder 24 and the rod 240 to extend, which thus causes the bucket 23 to perform the tilt operation (raising operation).

To the lift arm cylinder 22L which is one of the two lift arm cylinders 22L, 22R, a lift arm rod pressure sensor 38A for detecting a rod pressure PLr that is an internal pressure of the rod chamber 22A and a lift arm bottom pressure sensor 38B for detecting a bottom pressure PLb that is an internal pressure of the bottom chamber 22B are attached, respectively. In FIG. 4, the lift arm rod pressure sensor 38A and the lift arm bottom pressure sensor 38B are attached to the left lift arm cylinder 22L, however, they may be attached to the right lift arm cylinder 22R.

In the same manner, to the bucket cylinder 24, a bucket rod pressure sensor 39A for detecting a rod pressure PBr that is an internal pressure of the rod chamber 24A and a bucket bottom pressure sensor 39B for detecting a bottom pressure PBb that is an internal pressure of the bottom chamber 24B are attached, respectively.

In the wheel loader 1, controlling the working device control circuitry 48 (lift arm solenoid control valve 481 and bucket solenoid control valve 482) by the excavation support controller 5 enables the autonomous operations of the working device 2 and thus the excavation work without the manipulations of the lift arm operation lever 124 and bucket operation lever 125 by the operator. An excavation support control system for the working device 2 by the excavation support controller 5 is activated when the operator turns on an excavation support start switch 49 provided in the operator's cab 12.

### (Configuration of excavation support controller 5)

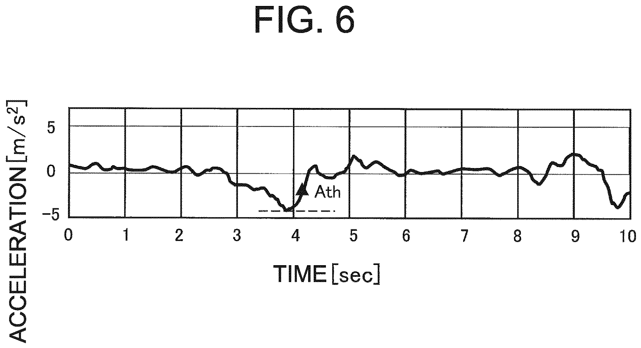

Next, the configuration of the excavation support controller 5 will be described with reference to FIG. 5 and FIG. 6. In the following, the excavation support controller 5 is simply referred to as a "controller 5".

FIG. 5 is a functional block diagram illustrating the functions of the controller 5.

The controllers 5 are configured such that a CPU, a RAM, a ROM, an HDD, an input I/F, and an output I/F are connected to each other via a bus. To the input I/F, various types of operation devices such as the excavation support start switch 49 and the forward and rearward changeover switch 122, and various sensors such as the lift arm angle sensor 31, the bell crank angle sensor 32, the accelerator pedal depression amount sensor 33, the torque sensor 34, the rotational speed sensor 35, the brake pedal depression amount sensor 36, the vehicle speed sensor 37, the lift arm rod pressure sensor 38A, the lift arm bottom pressure sensor 38B, the bucket rod pressure sensor 39A, and the bucket bottom pressure sensor 39B are connected. To the output I/F, the lift arm solenoid control valve 481 and the bucket solenoid control valve 482 (working device control circuitry 48) are connected.

In this hardware configuration, the CPU reads a control program (software) stored in a recording medium such as the ROM, the HDD, or an optical disc, loads it onto the RAM, and executes the control program as loaded, whereby the control program and the hardware cooperate to realize the functions of the controller 5.

In the present embodiment, the configuration of the controller 5 has been described as a combination of software and hardware, however, the present invention is not limited thereto, and an integrated circuitry that realizes the functions of the control program executed on the side of the wheel loader 1 may be used.

The controller 5 includes a data acquisition section 51, a determination section 52, a command signal output section 53, a processing stage count section 54, and a storage 55.

The data acquisition section 51 acquires the data relating to an ON signal output from the excavation support start switch 49, the rod pressure PLr detected by the lift arm rod pressure sensor 38A, the bottom pressure PLb detected by the lift arm bottom pressure sensor 38B, the rod pressure PBr detected by the bucket rod pressure sensor 39A, the bottom pressure PBb detected by the bucket bottom pressure sensor 39B, a switching signal output from the forward and rearward changeover switch 122, a vehicle speed V detected by the vehicle speed sensor 37, the lift arm angle α detected by the lift arm angle sensor 31, the bell crank angle γ detected by the bell crank angle sensor 32, an accelerator pedal depression amount SA detected by the accelerator pedal depression amount sensor 33, a brake pedal depression amount SB detected by the brake pedal depression amount sensor 36, the output torque Tr of the torque converter 41 detected by the torque sensor 34, and the output rotational speed R of the torque converter 41 detected by the rotational speed sensor 35.

The determination section 52 includes an activation determination section 521, an excavation preparation determination section 522, a stop request determination section 523, an excavation start determination section 524, a travelling direction determination section 525, a bucket posture determination section 526, a lift arm posture determination section 527, and a deceleration determination section 528.

The activation determination section 521 determines whether the excavation support control system is activated. Specifically, the activation determination section 521 determines that the excavation support control system is activated when the data acquisition section 51 acquires the ON signal from the excavation support start switch 49.

The excavation preparation determination section 522 determines whether an excavation preparation condition is satisfied. Here, the "excavation preparation condition" is that the working device 2 is in an excavation posture which will be described later, the excavation work is intended by the operator, and the inside of the bucket 23 is in an empty state.

Specifically, the excavation preparation determination section 522 determines that the working device 2 is in the excavation posture when the bucket angle β calculated based on the lift arm angle α and bell crank angle γ acquired by the data acquisition section 51 is within a predetermined angle threshold βth with respect to the ground surface of the wheel loader 1 (0<β≤βth). The "predetermined angle threshold βth" is, for example, 10°, and is set to the angle within the range allowing the bucket 23 to hit and enter the pile Q. In the above, the range of the bucket angle β in the excavation posture is set to the range more than 0, however, it is not limited thereto, and can be appropriately set to the range depending on the angle of repose of the pile or the like, for example, the range more than a negative angle state in which the dumping operation is performed for the bucket downward from the ground surface that the vehicle body touches (for example,-10°<β≤βth).

Furthermore, the excavation preparation determination section 522 determines that the excavation work is intended by the operator when the accelerator pedal depression amount SA acquired by the data acquisition section 51 is equal to or more than a predetermined depression amount threshold SAth (SA≥SAth). The "predetermined depression amount threshold SAth" is set to the value corresponding to the minimum accelerator pedal depression amount allowing the wheel loader 1 to travel.

Still further, the excavation preparation determination section 522 determines that the inside of the bucket 23 is in an empty state when the bottom pressure PLb of the lift arm cylinders 22L, 22R acquired by the data acquisition section 51 is less than a predetermined bottom pressure threshold PLbth (PLb<PLbth). The "predetermined bottom pressure threshold PLbth" is set to the bottom pressure applied to the lift arm cylinders 22L, 22R while the minimum amount of load is in the bucket 23.

The stop request determination section 523 determines whether the excavation support control by the excavation support control system is requested to be stopped. Specifically, the stop request determination section 523 determines whether the brake pedal 123 is operated based on the brake pedal depression amount SB acquired by the data acquisition section 51, and determines that the excavation support control has been requested to be stopped upon determining that the brake pedal 123 was operated.

The excavation start determination section 524 determines whether the excavation start condition is satisfied, in other words, whether the bucket 23 has touched the pile Q. Here, the "excavation start condition" is that the pressure PL applied to the two lift arm cylinders 22L, 22R and the pressure PB applied to the bucket cylinder 24 increase, the vehicle speed V is the speed during the excavation work, and the force from the pile Q is acting on the wheel loader 1.

Specifically, when the total value P of the pressure PL applied to the two lift arm cylinders 22L, 22R and the pressure PB applied to the bucket cylinder 24 (=PL+PB) is more than a predetermined first pressure threshold Pth (P>Pth), the excavation start determination section 524 determines that the pressure PL applied to the two lift arm cylinders 22L, 22R and the pressure PB applied to the bucket cylinder 24 increases.

The "first pressure threshold Pth" is set to the value corresponding to the total value of the pressure PL applied to the two lift arm cylinders 22L, 22R and the pressure PB applied to the bucket cylinder 24 while the working device 2 is not operating and the working device 2 is not receiving a force from the outside which is caused by touching or the like.

The excavation start determination section 524 may be configured to acquire a force corresponding to the pressure PL applied to the two lift arm cylinders 22L, 22R and a force corresponding to the pressure PB applied to the bucket cylinder 24, respectively, and determine that the pressure PL applied to the two lift arm cylinders 22L, 22R and the pressure PB applied to the bucket cylinder 24 increases when the total value of the forces as acquired is more than a threshold of the force corresponding to the first pressure threshold Pth.

Here, the force applied to the two lift arm cylinders 22L, 22R can be obtained by subtracting the product of the rod pressure PLr of the lift arm cylinder 22L and the cross-sectional area of the rod chamber 22A from the product of the bottom pressure PLb of the lift arm cylinder 22L acquired by the data acquisition section 51 and the cross-sectional area of the bottom chamber 22B, and doubling the subtracted value as calculated.

In the same manner, the force applied to the bucket cylinder 24 is obtained by subtracting the product of the rod pressure PBr of the bucket cylinder 24 and the cross-sectional area of the rod chamber 24A from the product of the bottom pressure PBb of the bucket cylinder 24 acquired by the data acquisition section 51 and the cross-sectional area of the bottom chamber 24B.

In the present embodiment, the excavation start condition includes the increase of the pressure PL applied to the two lift arm cylinders 22L, 22R and the increase of the pressure PB applied to the bucket cylinder 24, however, it does not have to necessarily include the increase of both the pressure PL applied to the two lift arm cylinders 22L, 22R and the pressure PB applied to the bucket cylinder 24, and may include only the increase of the bottom pressure PLb of the lift arm cylinder. Accordingly, the "first pressure threshold Pth" may be set to at least the value corresponding to the bottom pressure of the lift arm cylinders 22L, 22R in the state where the lift arm 21 is not operating and also the bucket 23 is touching the pile Q.

However, including both the increase of the pressure PL applied to the two lift arm cylinders 22L, 22R and the increase of the pressure PB applied to the bucket cylinder 24 in the condition enables suppression of erroneous determination of as to excavation start and thus improvement in the accuracy of the determination as compared with the case of including only the increase of the bottom pressure PLb of the lift arm cylinders 22 in the condition.

In the present embodiment, as the pressure PL applied to the two lift arm cylinders 22L, 22R and the pressure PB applied to the bucket cylinder 24, the bottom pressure PLb of the lift arm cylinders 22L, 22R and the bottom pressure PBb of the bucket cylinder 24 which are acquired by the data acquisition section 51 are used, however, the rod pressure PLr of the lift arm cylinders 22L, 22R and the rod pressure PBr of the bucket cylinder 24 may be used. In this case, the excavation start condition includes the "decrease" of the pressure applied to the two lift arm cylinders 22L, 22R and that of the pressure applied to the bucket cylinder 24.

Furthermore, the excavation start determination section 524 determines that the vehicle speed V is the speed during the excavation work when the vehicle speed V acquired by the data acquisition section 51 is equal to or less than a predetermined speed threshold Vth (V≤Vth). Here, the "predetermined speed threshold Vth" is set to the speed frequently used in the excavation work, for example, 12km/h.

Then, the excavation start determination section 524 determines that the force from the pile Q is acting on the wheel loader 1, in other words, the bucket 23 is touching the pile Q when an applied force F applied from the outside to the vehicle body while the vehicle body is not accelerating with respect to the output from the engine 40 is equal to or more than a predetermined applied force threshold Fth (F≥Fth). The "predetermined applied force threshold Fth" is the value corresponding to the force applied from the pile Q to the vehicle body when the bucket 23 touched the pile Q in the state where the lift arm 21 being not operating.

Here, the applied force F is obtained by subtracting the product of a vehicle weight W stored in the storage 55 and an acceleration VA calculated based on the vehicle speed V acquired in the data acquisition section 51 (W×VA) from the product of the output torque Tr of the torque converter 41 acquired by the data acquisition section 51 and the output rotational speed R of the torque converter 41 (Tr×R).

The traveling direction determination section 525 determines the traveling direction (traveling forward, traveling rearward, or stop) of the wheel loader 1 based on the switching signal from the forward and rearward changeover switch 122 acquired by the data acquisition section 51.

The bucket posture determination section 526 determines what posture the bucket 23 is in based on the bucket angle β calculated using the lift arm angle α and the bell crank angle γ acquired by the data acquisition section 51. Note that the bucket posture determination section 526 does not necessarily have to determine the posture of the bucket 23 based on the bucket angle β, and may determine the posture of the bucket 23 based on, for example, the position of the bucket cylinder 24, the output time of the operation amount of the bucket 23, and the like.

Specifically, the bucket posture determination section 526 determines whether the bucket angle β as calculated is equal to or more than a first angle threshold β1, equal to or more than a second angle threshold β2, and equal to or more than a third angle threshold β3, respectively.

Here, the "first angle threshold β1" is the angle at which the load is easily moved to the rearward side of the bucket 23 by the driving force of the vehicle body in the initial state of the start of the excavation work, and is set to, for example, 10°. Note that the first angle threshold β1 is preferably set to the angle less than 10° (for example, 8°) for the case where the output affecting the operation speed of the bucket 23 is large, for example when the rotational speed of the engine 40 is high, since the response of the bucket 23 is easily delayed in this case.

The "second angle threshold β2" is the angle of the bucket angle β slightly increased by the raising operation of the lift arm 21 and the tilt operation of the bucket 23 which have been carried out from the initial state of the excavation work. The lifting operation of the lift arm 21 and the tilt operation of the bucket 23 to be performed from this state are the final operations of the working device 2, and thus the "second angle threshold β2" is the angle at which the load would be moved and mounted in the rearward side of the bucket 23 (sufficient inertia can be given to the load in the bucket 23) in these final operations of the working device 2, and is set to, for example, 20°. In the tilt operation of the bucket 23 in the final operations, the bucket 23 is tilted to the limit and is in the rearmost tilted state (final posture) in which the bucket 23 is tilted rearwardly the most toward the operator's cab 12, that is, is in the full tilt state, and thus the tilt operation of the bucket 23 in the final operations corresponds to the full tilt operation.

In the case where the operation amount and operation speed of the bucket 23 in the full tilt operation of the bucket 23 are set to relatively high values, inertia can be given to the load in the bucket 23 with a small operation amount, and thus the second angle threshold β2 may be set to a high value such as 50°. Alternatively, the second angle threshold β2 may be set in accordance with the operation speed with respect to the operation amount of the bucket 23 so far.

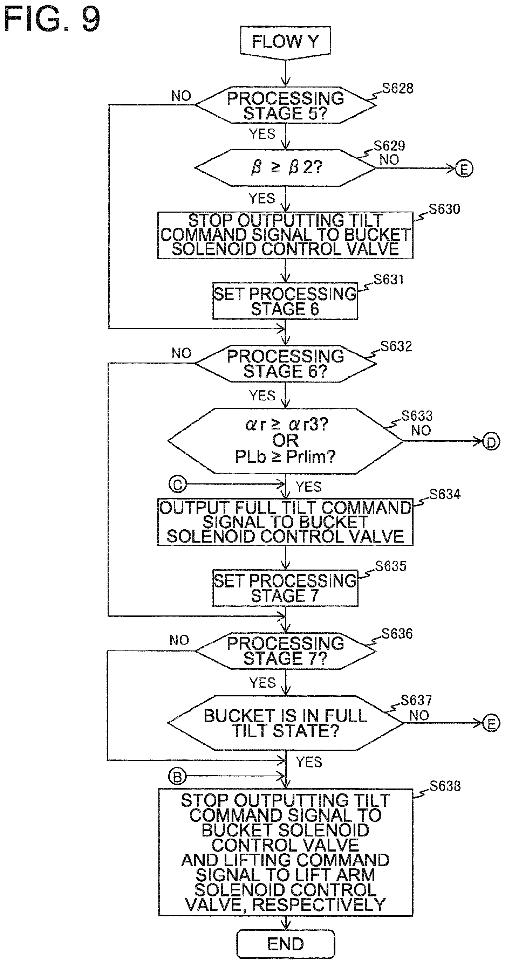

The "third angle threshold β3" is the angle at which the load can be mounted on the rearward side of the bucket 23 only by one more tilt operation of the bucket 23 (sufficient inertia can be given to the load in the bucket 23), and is set to, for example, 20° to 50°. That is, the "one more tilt operation of the bucket 23 " corresponds to the full tilt operation. Accordingly, it is preferable that the "third angle threshold β3" is set to the angle at which an operation amount of the full tilt operation for making the bucket 23 reach the full tilt state from this state can be sufficiently secured. The third angle threshold β3 may be the same as the second angle threshold β2 described above, or may be the value obtained by adding a variation of the bucket angle β, which corresponds to the change assumed in step S633 which will be described later (see FIG. 9), to the second angle threshold β2.

The bucket posture determination section 526 determines that the posture of the bucket 23 is in the final posture enabling the load to be mounted to the rearward side of the bucket 23 by the subsequent tilt operation (full tilt operation) when the bucket angle β as calculated is equal to or more than the third angle threshold β3 (β≥β3).

Here, each of the "first angle threshold β1", the "second angle threshold β2", and the "third angle threshold β3" is an aspect of a "predetermined rearward tilt amount threshold" of the bucket 23.

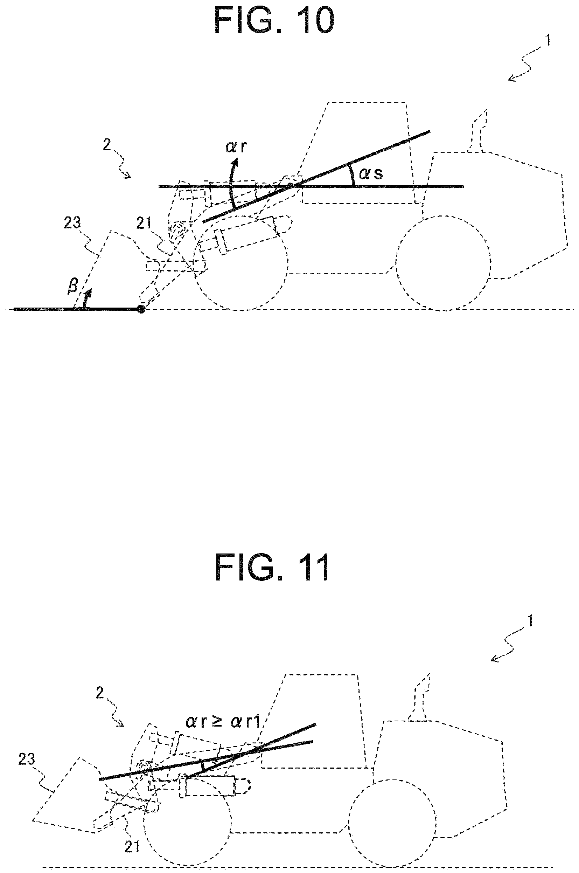

The lift arm posture determination section 527 determines whether a lifting angle αr (hereinafter, simply referred to as a "lift arm lifting angle αr", see FIG. 10) of the lift arm 21 raised from a reference angle αs of the lift arm 21, which will be described later, is equal to or more than a first lifting angle threshold αr1 (for example, 5°) or whether the bottom pressure PLb of the lift arm cylinder 22L acquired by the data acquisition section 51 is equal to or more than a predetermined upper limit pressure Prlim.

Furthermore, the lift arm posture determination section 527 determines whether the lift arm lifting angle αr from the reference angle αs of the lift arm 21 is equal to or more than a second lifting angle threshold αr2 (for example, 10°) or whether the bottom pressure PLb of the lift arm cylinder 22L acquired by the data acquisition section 51 is equal to or more than the predetermined upper limit pressure Prlim.

Still further, the lift arm posture determination section 527 determines whether the lift arm lifting angle αr from the reference angle αs of the lift arm 21 is equal to or more than a third lifting angle threshold αr3 (for example, 15°) or whether the bottom pressure PLb of the lift arm cylinder 22L acquired by the data acquisition section 51 is equal to or more than the predetermined upper limit pressure Prlim.

Here, each of the "first lifting angle threshold αr1", the "second lifting angle threshold αr2", and the "third lifting angle threshold αr3" is an aspect of a "predetermined lifting amount threshold" for the lift arm 21.

The "predetermined upper limit pressure Prlim" corresponds to a second pressure threshold that is more than the first pressure threshold Pth, and is preferably set to the value slightly less than a set relief pressure that is set as a pressure to be released when the pressure in a hydraulic line in the working device control circuitry 48 reaches its limit.

In the present embodiment, the lift arm posture determination section 527 determines the posture (state) of the lift arm 21 using the lifting angle αr (lifting amount) of the lift arm 21 increased from the reference angle αs (reference posture) of the lift arm 21, however, it is not limited thereto, and for example, the lift arm posture determination section 527 may determine the state of the lift arm 21 based on the posture of the lift arm 21 that is set in advance using the angle formed between the ground surface that the wheel loader 1 touches and the bottom surface (bottom surface of the working device 2) at the tip part of the lift arm 21 or the vertical height from the ground surface that the wheel loader 1 touches to the distal end of the lift arm 21 (bucket pin).

The deceleration determination section 528 determines whether a deceleration condition is satisfied, specifically, whether the bucket 23 hit and entered the pile Q and thus the vehicle body has sufficiently decelerated with receiving the reaction force from the pile Q. In the following, the "deceleration condition" will be described with reference to FIG. 6.

FIG. 6 illustrates a graph of a temporal change in the acceleration of the wheel loader 1 at the start of the excavation work.

In the excavation work, the wheel loader 1 travels forward toward the pile Q at the vehicle speed of, for example, about 10km/h, and as approaching the pile Q, gradually decelerates so that the vehicle speed becomes equal to or less than 2km/h. During this, as illustrated in 3.0 seconds to 3.8 seconds of FIG. 6, the acceleration, which is a positive value of the differential value of the vehicle speed, decreases in the negative direction. In other words, the deceleration, which is a negative value of the differential value of the vehicle speed (negative acceleration), increases.

Then, when the bucket 23 touches (hits and enters) the pile Q, the acceleration turns to increase from the minimum value immediately thereafter. In other words, when the bucket 23 touches the pile Q and the reaction force from the pile Q acts on the vehicle body, the deceleration takes the maximum value, and turns to decrease immediately thereafter. Based on the relation between the vehicle speed and the deceleration, the deceleration determination section 528 can determine whether the bucket 23 hit and entered the pile Q and the vehicle body has decelerated sufficiently with receiving the reaction force from the pile Q.

That is, the "deceleration condition" is that the vehicle speed V is equal to or less than the vehicle speed immediately before the bucket 23 his and enters the pile Q, and also the deceleration turns to decrease from the maximum value (acceleration turns to increase from the minimum value). For example, the deceleration determination section 528 determines whether the vehicle speed V acquired by the data acquisition section 51 is equal to or less than 2km/h, and also the deceleration turns to be more than a deceleration Ath (mark of ▲ in the graph of FIG. 6), which is 0.6 times of the maximum value of the deceleration when the vehicle speed V became equal to or less than 2km/h.

Then, the excavation support controller 5 records the lift arm angle α acquired by the data acquisition section 51 when the deceleration determination section 528 determines that the deceleration condition is satisfied, as the lift arm reference angle αs, in the storage 55. That is, the posture (state) of the working device 2 when the deceleration determination section 528 determined that the deceleration condition was satisfied serves as a reference.

The command signal output section 53 outputs, to the lift arm solenoid control valve 481, a lifting command signal as a command signal relating to a lifting operation of the lift arm 21 in accordance with the result of the determination made by the excavation start determination section 524 and the result of the determination made by the lift arm posture determination section 527.

Furthermore, the command signal output section 53 outputs or stops outputting, to the bucket solenoid control valve 482, a tilt command signal as a command signal relating to the tilt operation (including the full tilt operation) of the bucket 23 in accordance with the result of the determination made by the bucket posture determination section 526 and the result of the determination made by the lift arm posture determination section 527.

The processing stage count section 54 sets a processing stage of the excavation support control to "1" when the excavation start determination section 524 determines that the excavation start condition is satisfied. Furthermore, the processing stage count section 54 sets the processing stage of the excavation support control to "2" when the deceleration determination section 528 determines that the deceleration condition is satisfied and thus the lift arm reference angle αs is recorded in the storage 55.

Then, the processing stage count section 54 sets the processing stages 3 to 7 in order when the command signal output section 53 outputs the tilt command signal to the bucket solenoid control valve 482, and when the command signal output section 53 stops outputting the tilt command signal to the bucket solenoid control valve 482, respectively.

The storage 55 is a memory, in which the predetermined angle threshold βth, the first angle threshold β1, the second angle threshold β2, the third angle threshold β3, the lift arm reference angle αs, the first lifting angle threshold αr1, the second lifting angle threshold αr2, the third lifting angle threshold αr3, the predetermined depression amount threshold SAth, the predetermined bottom pressure threshold PLbth, the predetermined first pressure threshold Pth, the predetermined speed threshold Vth, and the predetermined upper limit pressure Prlim are stored, respectively.

### (Processing in excavation support controller 5)

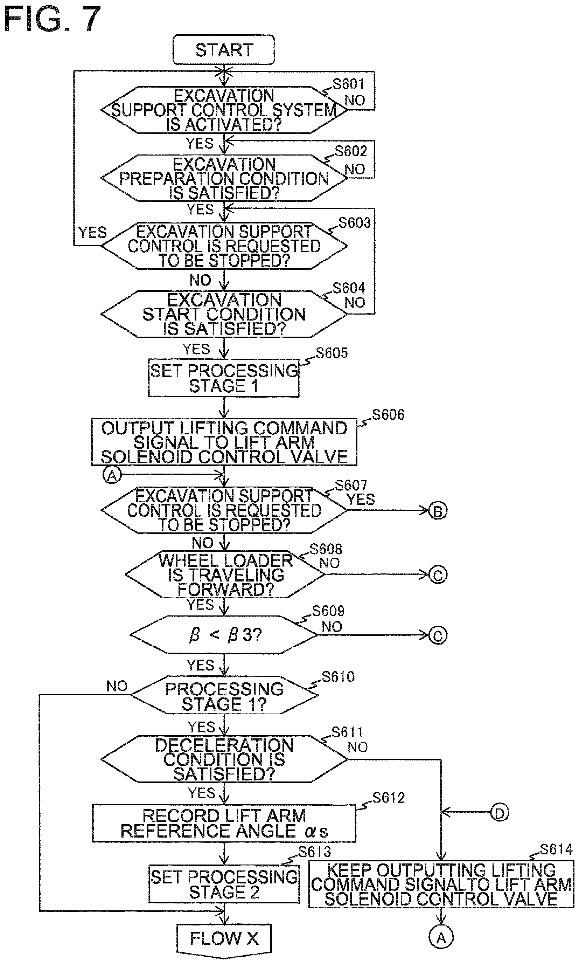

Next, a specific flow of the processing executed in the excavation support controller 5 will be described with reference to FIG. 7 to FIG. 16.

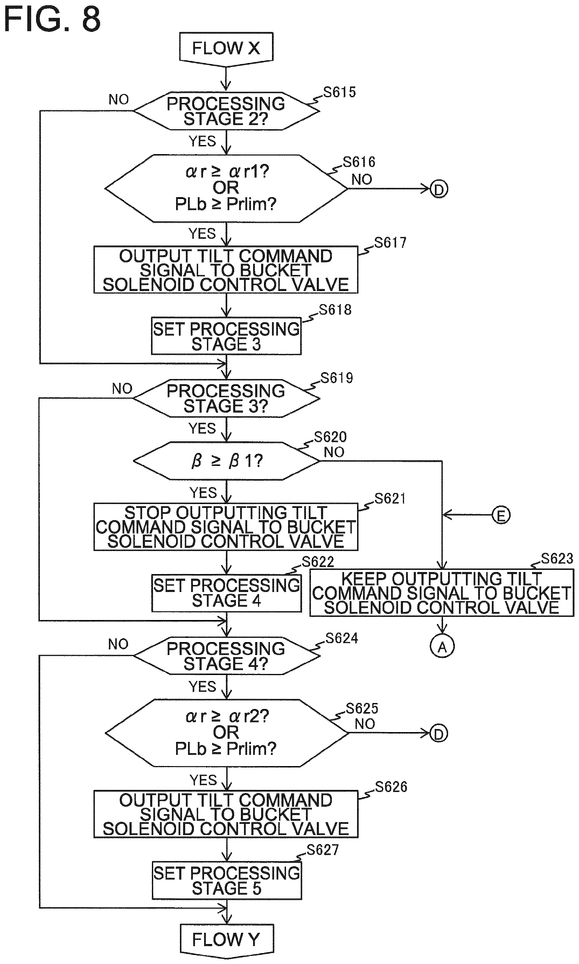

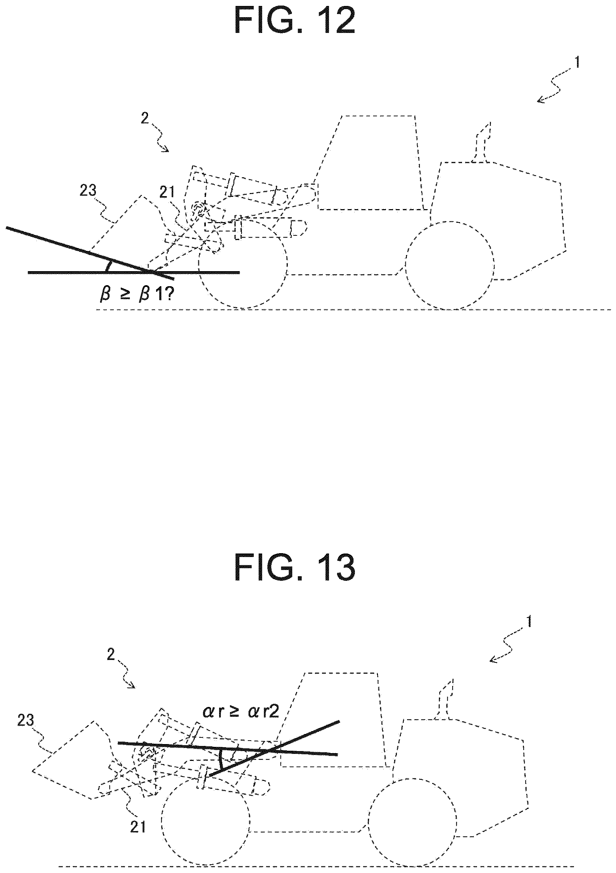

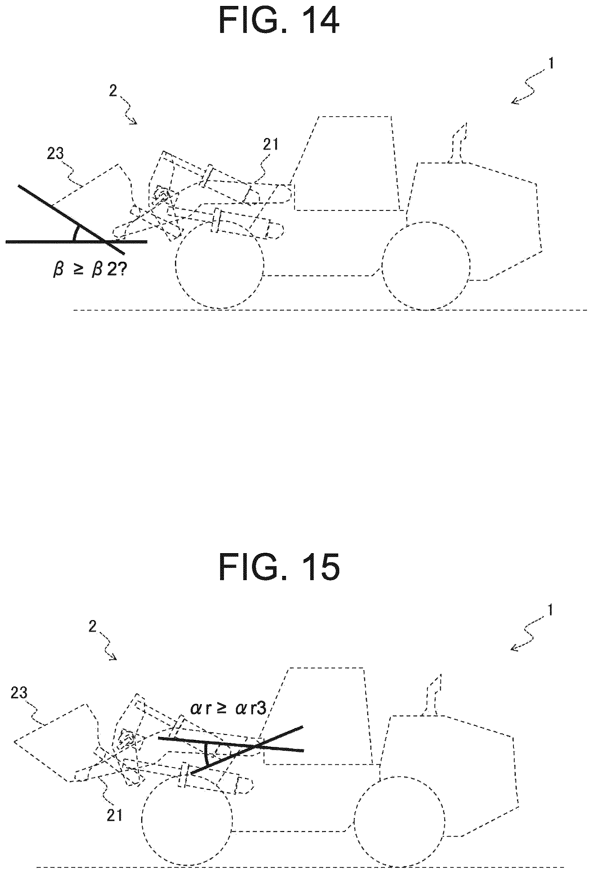

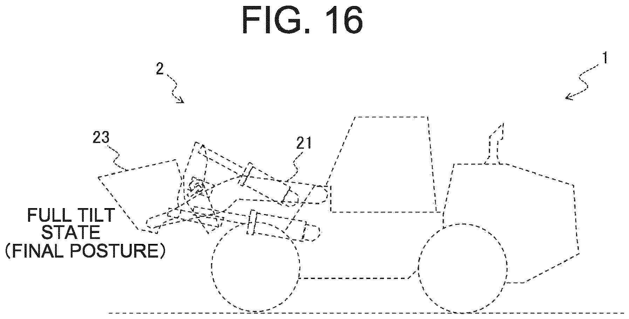

FIG. 7 illustrates a flowchart of a flow of the processing executed by the excavation support controller 5. FIG. 8 illustrates a flow X which is the continuation of the flowchart of FIG. 7. FIG. 9 illustrates a flow Y which is the continuation of the flowchart of FIG. 8. FIG. 10 to FIG. 16 are the diagrams for explaining the change in the posture of the working device 2 while the excavation support controller 5 executes the processing of the flowcharts illustrated in FIG. 7 to FIG. 9. Specifically, FIG. 10 schematically illustrates an initial posture of the working device while the excavation support controller 5 executes the processing illustrated in FIG. 7 to FIG. 9. FIG. 11 schematically illustrates the posture of the working device 2 when the processing proceeds to YES in step S616 of FIG. 8. FIG. 12 schematically illustrates the posture of the working device 2 when the processing proceeds to YES in step S620 of FIG. 8. FIG. 13 schematically illustrates the posture of the working device 2 when the processing proceeds to YES in step S625 of FIG. 8. FIG. 14 schematically illustrates the posture of the working device 2 when the processing proceeds to YES in step S629 of FIG. 9. FIG. 15 schematically illustrates the posture of the working device 2 when the processing proceeds to YES in step S633 of FIG. 9. FIG. 16 schematically illustrates the posture of the working device 2 when the processing proceeds to YES in step S637 of FIG. 9.

As illustrated in FIG. 7, in the excavation support controller 5, firstly, the activation determination section 521 determines whether the excavation support control system is activated (step S601). In step S601, specifically, the activation determination section 521 determines whether the data acquisition section 51 has acquired the ON signal from the excavation support start switch. At this time, the working device 2 is in the initial posture as illustrated in FIG. 10.

When it is determined in step S601 that the excavation support control system is activated (step S601/YES), the excavation preparation determination section 522 determines whether the excavation preparation condition is satisfied (step S602).

On the other hand, if it is determined in step S601 that the excavation support control system is not activated (step S601/NO), in other words, if the data acquisition section 51 does not acquire the ON signal from the excavation support start switch, the processing does not proceed to step S602 of the next step until the data acquisition section 51 acquires the ON signal from the excavation support start switch and then the excavation support control system is started.

In step S602, the excavation preparation determination section 522 determines whether the bucket angle β calculated based on the lift arm angle α and the bell crank angle γ acquired by the data acquisition section 51 is within the predetermined angle threshold βth from the ground surface that the wheel loader 1 is touching (whether the working device 2 is in the excavation posture), whether the accelerator pedal depression amount SA acquired by the data acquisition section 51 is equal to or more than the predetermined depression amount threshold SAth (whether the excavation work is intended by the operator), and whether the bottom pressure PLb of the lift arm cylinders 22L, 22R acquired by the data acquisition section 51 is less than the predetermined bottom pressure threshold PLbth (whether the inside of the bucket 23 is in the empty state).

When it is determined in step S602 that the excavation preparation condition is satisfied (0<β≤βth, SA≥SAth, and PLb<PLbth) (step S602/YES), the stop request determination section 523 determines whether the excavation support control has been requested to be stopped based on the brake pedal depression amount SB acquired by the data acquisition section 51 (step S603) .

On the other hand, when it is determined in step S602 that the excavation preparation condition is not satisfied (β>βth, SA<SAth, or PLb≥PLbth) (step S602/NO), the processing does not proceed to step S603 of the next step until the excavation preparation condition is satisfied.

When it is determined in step S603 that the brake pedal 123 is not operated and thus the excavation support control is not been requested to be stopped (step S603/NO), the excavation start determination section 524 determines whether the excavation start condition is satisfied (step S604).

On the other hand, when it is determined in step S603 that the brake pedal 123 is operated and thus the excavation support control is requested to be stopped (step S603/YES), the processing returns to step S601 to be repeated.

In step S604, the excavation start determination section 524 determines whether the total value P of the pressure PL applied to the two lift arm cylinders 22L, 22R and the pressure PB applied to the bucket cylinder 24 is more than the predetermined first pressure threshold Pth, whether the vehicle speed V acquired by the data acquisition section 51 is equal to or less than the predetermined speed threshold Vth, and whether the applied force F applied from the outside to the vehicle body is equal to or more than the predetermined applied force threshold Fth, respectively.

When it is determined in step S604 that the excavation start condition is satisfied (P>Pth, V≤Vth, and F≥Fth) (step S604/YES), the processing stage count section 54 sets the processing stage 1 of the excavation support control (step S605). Subsequently, the command signal output section 53 outputs the lifting command signal to the lift arm solenoid control valve 481 (step S606). This causes the lift arm 21 to start the lifting operation.

Upon start of the lifting operation of the lift arm 21, the bucket 23 rises away from the ground and thus the bucket angle β increases, which causes the bucket 23 to be pushed down in the direction of the ground (downward direction) due to the gravity force of the load that has started to enter the bucket 23. This also causes the lift arm cylinders 22L, 22R to be pushed down in the direction of the ground (downward direction), and thus, in particular, the force of the front wheel 11A touching the ground increases, which can prevent the wheel 11 from slipping.

After the bucket 23 touches the pile Q, the working device 2 enters deeper to the inside of the pile Q with the passage of time. Accordingly, adjusting the amount of the lifting operation of the lift arm 21 to be increased as well with the passage of time may further prevent the slippage. On the other hand, reducing the amount of the lifting operation of the lift arm 21 so as to be inversely proportional to the change speed of the lift arm angle α can prevent the lifting operation of the lift arm 21 from being performed before the working device 2 enters deeply enough to the inside of the pile Q.

Next, the stop request determination section 523 determines again whether the excavation support control has been requested to be stopped based on the brake pedal depression amount SB acquired by the data acquisition section 51 (step S607).

When it is determined in step S607 that the brake pedal 123 is not operated and the excavation support control is not requested to be stopped (step S607/NO), the traveling direction determination section 525 determines whether the wheel loader 1 is traveling forward based on the switching signal acquired by the data acquisition section 51 (step S608).

On the other hand, when it is determined in step S607 that the brake pedal 123 is operated and thus the excavation support control is requested to be stopped (step S607/YES), the processing proceeds to step S638 of FIG. 9, and the command signal output section 53 stops outputting the lifting command signal to the lift arm solenoid control valve 481 and the tilt command signal to the bucket solenoid control valve 482, respectively (step S638). This stops the operations of the working device 2.

In the case of carrying out the processing flows of the excavation support controller 5 illustrated in FIG. 7 to FIG. 9 for the first time, in the steps prior to step S607, the command signal being output is only the lifting command signal to the lift arm solenoid control valve 481, and thus, in step S638, stop of the output of the lifting command signal to the lift arm solenoid control valve 481 is only carried out.

When it is determined in step S608 that the wheel loader 1 is traveling forward (step S608/YES), the bucket posture determination section 526 determines whether the bucket angle β acquired by the data acquisition section 51 is less than the third angle threshold β3 (step S609).

On the other hand, when it is determined in step S608 that the wheel loader 1 is not traveling forward, in other words, the wheel loader 1 is traveling rearward or being stopped (step S608/NO), the processing proceeds to step S634 illustrated in FIG. 9, and the command signal output section 53 outputs a full tilt command signal to the bucket solenoid control valve 482 (step S634).

That is, the excavation support controller 5 controls the bucket 23 to be in the full tilt state regardless of the posture of the bucket 23 when the data acquisition section 51 acquires the switching signal relating to the rearward traveling or the switching signal relating to the stop during the excavation support control.

When it is determined in step S609 that the bucket angle β is less than the third angle threshold β3 (β<β3) (step S609/YES), the processing stage count section 54 determines whether the processing stage of the excavation support control is "1" (step S610).

On the other hand, when it is determined in step S609 that the bucket angle β is equal to or more than the third angle threshold β3 (β≥β3) (step S609/NO), the processing proceeds to step S634 illustrated in FIG. 9, and the command signal output section 53 outputs the full tilt command signal to the bucket solenoid control valve 482 (step S634). That is, in step S609, it is determined whether the bucket 23 is in the final posture, and when it is determined in step S609 that the bucket 23 is in the final posture, the bucket 23 is controlled so as to be in the full tilt state.

When it is determined that the processing stage of the excavation support control is set to "1" in step S610 (step S610/YES), the deceleration determination section 528 determines whether the deceleration condition is satisfied (step S611).

On the other hand, if it is determined in step S610 that the processing stage of the excavation support control is not set to "1" (step S610/NO), the processing proceeds to step S615 illustrated in FIG. 8, and the processing stage count section 54 determines whether the processing stage of the excavation support control is set to "2" (step S615).

In step S611, the deceleration determination section 528 determines whether the vehicle speed V acquired by the data acquisition section 51 is equal to or less than the vehicle speed immediately before the bucket 23 hits and enters the pile Q, and also whether the acceleration based on the vehicle speed V turns to increase from the minimum value, in other words, whether the deceleration turns to decrease from the maximum value.

When it is determined in step S611 that the deceleration condition is satisfied (step S611/YES), the excavation support controller 5 records the lift arm angle α acquired by the data acquisition section 51 at that time as the lift arm reference angle αs in the storage 55 (step S612). Subsequently, the processing stage count section 54 sets the processing stage 2 of the excavation support control (step S613).

On the other hand, if it is determined in step S611 that the deceleration condition is not satisfied (step S611/NO), it can be considered that the bucket 23 has not sufficiently entered the pile Q, and thus the command signal output section 53 keeps outputting the lifting command signal to the lift arm solenoid control valve 481 (step S614), and then the processing returns to step S607 to be repeated.

As illustrated in FIG. 8, when the processing stage 2 is set by the processing stage count section 54 (step S615/YES), the lift arm posture determination section 527 determines whether the lift arm lifting angle αr is equal to or more than the first lifting angle threshold αr1 or the bottom pressure PLb of the lift arm cylinders 22 is equal to or more than the predetermined upper limit pressure Prlim (step S616). If the processing stage 2 is not set by the processing stage count section 54 (step S615/NO), the processing proceeds to step S619 to determine whether the processing stage 3 is set.

When it is determined in step S616 that the lift arm lifting angle αr is equal to or more than the first lifting angle threshold αr1 (αr≥αr1) or the bottom pressure PLb of the lift arm cylinders 22 is equal to or more than the predetermined upper limit pressure Prlim (PLb≥Prlim) as illustrated in FIG. 11 (step S616/YES), the command signal output section 53 outputs a tilt command signal to the bucket solenoid control valve 482 (step S617). Subsequently, the processing stage count section 54 sets the processing stage 3 of the excavation support control (step S618).

On the other hand, when it is determined in step S616 that the lift arm lifting angle αr is less than the first lifting angle threshold αr1 (αr<αr1) and also the bottom pressure PLb of the lift arm cylinders 22 is less than the predetermined upper limit pressure Prlim (PLb<Prlim) (step S616/NO), the processing returns to step S614 to be repeated.

Next, when the processing stage 3 is set by the processing stage count section 54 (step S619/YES), the bucket posture determination section 526 determines whether the bucket angle β is equal to or more than the first angle threshold β1 (step S620). If the processing stage 3 is not set by the processing stage count section 54 (step S619/NO), the processing proceeds to step S622 to determine whether the processing stage 4 is set (step S624).

When it is determined in step S620 that the bucket angle β is equal to or more than the first angle threshold β1 (β≥β1) as illustrated in FIG. 12 (step S620/YES), the command signal output section 53 stops outputting the tilt command signal to the bucket solenoid control valve 482 (step S621). Subsequently, the processing stage count section 54 sets the processing stage 4 of the excavation support control (step S622).

On the other hand, when it is determined in step S620 that the bucket angle β is less than the first angle threshold β1 (β<β1) (step S620/NO), in other words, when it is determined that the bucket 23 is tilted forward more than that in the final posture, the command signal output section 53 keeps outputting the tilt command signal to the bucket solenoid control valve 482 (step S623), and thereafter, the processing returns to step S607 to be repeated. At this time, the command signal output section 53 also keeps outputting the lifting command signal to the lift arm solenoid control valve 481.

When the processing stage 4 is set by the processing stage count section 54 (step S624/YES), the lift arm posture determination section 527 determines whether the lift arm lifting angle αr is equal to or more than the second lifting angle threshold αr2 or the bottom pressure PLb of the lift arm cylinders 22 is equal to or more than the predetermined upper limit pressure Prlim (step S625).

If the processing stage 4 is not set by the processing stage count section 54 (step S624/NO), the processing proceeds to step S628 illustrated in FIG. 9 to determine whether the processing stage 5 is set.

When it is determined in step S625 that, as illustrated in FIG. 13, the lift arm lifting angle αr is equal to or more than the second lifting angle threshold αr2 (αr≥αr2) or the bottom pressure PLb of the lift arm cylinders 22 is equal to or more than the predetermined upper limit pressure Prlim (PLb≥Prlim) (step S625/YES), the command signal output section 53 outputs the tilt command signal to the bucket solenoid control valve 482 again to the bucket solenoid control valve 482 (step S626). Subsequently, the processing stage count section 54 sets the processing stage 5 of the excavation support control (step S627).

On the other hand, when it is determined in step S625 that the lift arm lifting angle αr is less than the second lifting angle threshold αr2 (αr<αr2) and the bottom pressure PLb of the lift arm cylinders 22 is less than the predetermined upper limit pressure Prlim (PLb<Prlim) (step S625/NO), the processing returns to step S614 to be repeated.

As illustrated in FIG. 9, when the processing stage 5 is set by the processing stage count section 54 (step S628/YES), the bucket posture determination section 526 determines whether the bucket angle β is equal to or more than the second angle threshold β2 (step S629). If the processing stage 5 is not set by the processing stage count section 54 (step S628/NO), the processing proceeds to step S632 to determine whether the processing stage 6 is set.

When it is determined in step S629 that the bucket angle β is equal to or more than the second angle threshold β2 (β≥β2) as illustrated in FIG. 14 (step S629/YES), the command signal output section 53 stops outputting the tilt command signal to the bucket solenoid control valve 482 (step S630). Subsequently, the processing stage count section 54 sets the processing stage 6 of the excavation support control (step S631).

On the other hand, when it is determined in step S629 that the bucket angle β is less than the second angle threshold β2 (β<β2) (step S629/NO), the processing returns to step S623 to be repeated.

Next, when the processing stage 6 is set by the processing stage count section 54 (step S632/YES), the lift arm posture determination section 527 determines whether the lift arm lifting angle αr is equal to or more than the third lifting angle threshold αr3 or the bottom pressure PLb of the lift arm cylinders 22 is equal to or more than the predetermined upper limit pressure Prlim (step S633). When the processing stage 6 is not set by the processing stage count section 54 (step S632/NO), the processing proceeds to step S636 to determine whether the processing stage 7 is set.

When it is determined in step S633 that the lift arm lifting angle αr is equal to or more than the third lifting angle threshold αr3 (αr≥αr3) or the bottom pressure PLb of the lift arm cylinders 22 is equal to or more than the predetermined upper limit pressure Prlim (PLb≥Prlim) as illustrated in FIG. 15 (step S633/YES), the command signal output section 53 outputs the full tilt command signal to the bucket solenoid control valve 482 (step S634). Subsequently, the processing stage count section 54 sets the processing stage 7 (step S635).

On the other hand, when it is determined in step S633 that the lift arm lifting angle αr is less than the third lifting angle threshold αr3 (αr<αr3) and the bottom pressure PLb of the lift arm cylinders 22 is less than the predetermined upper limit pressure Prlim (PLb<Prlim) (step S633/YES), the processing returns to step S614 to be repeated.

Next, when the processing stage 7 is set by the processing stage count section 54 (step S636/YES), the bucket posture determination section 526 determines whether the bucket 23 is fully tilted from the bucket angle β calculated based on the lift arm angle α and the bell crank angle γ acquired by the data acquisition section 51 (step S637).

If the processing stage 7 is not set by the processing stage count section 54 (step S636/NO), the processing proceeds to step S638, and the command signal output section 53 stops outputting the tilt command signal to the bucket solenoid control valve 482 and the lifting command signal to the lift arm solenoid control valve 481, respectively.

When it is determined in step S637 that the bucket 23 is in the full tilt state as illustrated in FIG. 16 (step S637/YES), the command signal output section 53 stops outputting the tilt command signal to the bucket solenoid control valve 482 and the lifting command signal to the lift arm solenoid control valve 481 (step S638), respectively, and then the excavation support control processing ends.

On the other hand, when it is determined in step S637 that the bucket 23 is not fully tilted (step S637/NO), the processing returns to step S623 to be repeated.

As described above, in the excavation support controller 5, when the "start condition", in which the lifting angle αr of the lift arm 21 is equal to or more than the predetermined lifting angle threshold (first lifting angle threshold αr1, second lifting angle threshold αr2, or third lifting angle threshold αr3) or the bottom pressure PLb of the lift arm cylinders 22 is equal to or more than the upper limit pressure Prlim, is satisfied, the tilt command signal "starts" to be output to the bucket solenoid control valve 482. Furthermore, when the "stop condition", in which the bucket angle β of the bucket 23 is equal to or more than the predetermined angle threshold (first angle threshold β1 or second angle threshold β2), is satisfied, the tilt command signal "stops" to be output to the bucket solenoid control valve 482.

Then, the tilt command signal starts or stops to be output to the bucket solenoid control valve 482 repeatedly based on these start condition and stop condition until the bucket 23 is in a predetermined posture (corresponding to the "final posture" described above). In other words, the operations of the lift arm 21 and those of the bucket 23 are controlled in accordance with the result of determination for the start condition and the result of the determination for the stop condition so as to make the bucket angle β reach a preset target angle. Thus, in the wheel loader 1, the load can be sufficiently mounted in the bucket 23 regardless of the size and properties of the pile Q as a work object and the operations performed by the wheel loader 1 before the start of excavation.

Specifically, at the stages of step S620 and step S629, the bucket angle β is held at the first angle threshold β1 and the second angle threshold β2, respectively, and thus the bucket 23 is not excessively raised. In this state, the load is pressed against the bottom surface of the bucket 23, which enables, using this force, the load to be accommodated in the bucket 23, and also the bucket 23 is allowed to sufficiently operate in the last full tilt operation. Then, giving inertia to the load that was located closer to the opening (front) of the bucket 23 in the last full tilt operation to move the load toward the back side of the bucket 23 enables the load to be prevented from falling from the bucket 23 during a transportation work after the excavation work. This can improve the work efficiency.

Furthermore, when the bucket angle β reaches the third angle threshold β3 in step S609, in other words, when the bucket 23 is the final posture, the excavation support controller 5 does not cause the bucket 23 to perform the tilt operation further, and outputs the full tilt command signal to the bucket solenoid control valve 482 to cause the bucket 23 to perform the full tilt operation. This gives enough inertia to the load in the bucket 23 and can cause it to be moved to the back side of the bucket 23.

Still further, in the present embodiment, it is determined in step S604 whether a force is acting on the wheel loader 1 from the pile Q, in other words, whether the bucket 23 is touching (has hit and entered) the pile Q by determining whether the applied force F applied to the vehicle body from the outside is equal to or more than the predetermined applied force threshold Fth in the state where the vehicle body is not accelerating with respect to the output of the engine 40. This enables accurate determination whether the wheel loader 1 is to start the excavation work, and thus suppression of erroneous determination of, for example, determining the excavation work as a dosing work for leveling the ground.

Hereinabove, the embodiment of the present invention has been described. The present invention is not limited to the embodiment and modifications described above, and includes various modifications. For example, the embodiment described above has been described in detail for the purpose of making the present invention easy to be understood, but is not necessarily limited to the one having all the features described above. In addition, a part of the configuration of the present embodiment can be replaced with a configuration of other embodiments, and a configuration of other embodiments can be added to the configuration of the present embodiment. Furthermore, for a part of the configuration of the present embodiment, other configurations may be added, or deletion or replacement may be performed.

For example, in the embodiment described above, it has been explained that the bucket 23 is in the full tilt state by performing the tilt operation three times, however, it is not limited thereto. The present invention can be applied to the case where the bucket 23 is in the full tilt state by performing the tilt operation once or the case where the bucket 23 is in the full tilt state by performing the tilt operation four times or more.

Furthermore, in the embodiment described above, a torque converter system is employed for the travelling drive system 401, however, which is not limited thereto, and an HST system may be employed therefor.

### REFERENCE SIGNS LIST

1: wheel loader
5: excavation support controller (controller)
21: lift arm
22: lift arm cylinder
23: bucket
24: bucket cylinder
31: lift arm angle sensor (lift arm posture sensor, bucket posture sensor)
32: bell crank angle sensor (bucket posture sensor)
38B: lift arm bottom pressure sensor (pressure sensor)
40: engine
41: torque converter
100: pile (work object)
122: forward and rearward changeover switch (forward and rearward switching device)
401: travelling drive system
481: lift arm solenoid control valve
482: bucket solenoid control valve

## Claims

1. A wheel loader comprising:
a lift arm attached to a front portion of a vehicle body, so as to rotate in an upward and downward direction with respect to the vehicle body;
a bucket attached to a tip part of the lift arm, so as to excavate a work object by a tilt operation in which the bucket rotates in an upward direction with respect to the lift arm and tilts rearward toward the vehicle body;
lift arm cylinders for driving the lift arm;
a bucket cylinder for driving the bucket;
a lift arm solenoid control valve configured to control the lift arm cylinders;
a bucket solenoid control valve configured to control the bucket cylinder; and
a controller configured to control the lift arm solenoid control valve and the bucket solenoid control valve, respectively, wherein
the wheel loader comprises:
a pressure sensor configured to detect a bottom pressure of the lift arm cylinders; and
a bucket posture sensor configured to detect a posture of the bucket,
the controller is configured to:
in a case where the bottom pressure detected by the pressure sensor reaches a first pressure threshold, output a command signal relating to a lift arm lifting operation to the lift arm solenoid control valve, the first pressure threshold corresponding to a bottom pressure of the lift arm cylinders in a state where the lift arm is not operating and also the bucket is touching the work object;
in a case where the posture of the bucket detected by the bucket posture sensor is a posture in which the bucket is tilted forward more than that in a predetermined posture, keep outputting the command signal relating to the lift arm lifting operation to the lift arm solenoid control valve and also output a command signal relating to the tilt operation of the bucket to the bucket solenoid control valve until the bucket is in the predetermined posture; and
in a case where the posture of the bucket detected by the bucket posture sensor reaches the predetermined posture, output a command signal relating to a full tilt operation of the bucket to the bucket solenoid control valve.

2. The wheel loader according to claim 1, further comprising a lift arm posture sensor configured to detect a posture of the lift arm, wherein
the controller is configured to:
in a case where a start condition that a lifting amount of the lift arm based on the posture of the lift arm detected by the lift arm posture sensor is equal to or more than a predetermined lifting amount threshold or the bottom pressure of the lift arm cylinders detected by the pressure sensor is equal to or more than a second pressure threshold which is more than the first pressure threshold is satisfied, start outputting the command signal relating to the tilt operation of the bucket to the bucket solenoid control valve;
in a case where a stop condition that a rearward tilt amount of the bucket based on the posture of the bucket detected by the bucket posture sensor is equal to or more than a predetermined rearward tilt amount threshold is satisfied, stop outputting the command signal relating to the tilt operation of the bucket to the bucket solenoid control valve; and
until the bucket is in the predetermined posture, based on the start condition and the stop condition, repeatedly start and stop outputting the command signal relating to the tilt operation of the bucket to the bucket solenoid control valve.

3. The wheel loader according to claim 2, further comprising an acceleration sensor configured to detect an acceleration of the vehicle body, wherein
the controller is configured to:
store, as a reference posture, the posture of the lift arm detected by the lift arm posture sensor when the acceleration of the vehicle body detected by the acceleration sensor turns to increase from a minimum value; and
determine the lift amount of the lift arm based on the reference posture as stored.

4. The wheel loader according to claim 1, further comprising a travelling drive system of a torque converter type including an engine mounted on the vehicle body and a torque converter for amplifying a torque transmitted from the engine, wherein
the controller is configured to:
based on an output torque of the torque converter, a rotational speed of the torque converter, a vehicle weight of the vehicle body, and an acceleration of the vehicle body, calculate an applied force applied from an outside to the vehicle body that has not accelerated; and
in a case where the applied force as calculated reaches an applied force threshold corresponding to an applied force applied from the work object to the vehicle body when the bucket touches the work object and also the bottom pressure detected by the pressure sensor reaches the first pressure threshold, output the command signal relating to the lifting operation of the lift arm to the lift arm solenoid control valve.

5. The wheel loader according to claim 1, further comprising a forward and rearward switching device configured to switch a traveling of the vehicle body between a forward traveling and a rearward traveling, wherein
the controller is configured to, upon acquiring a signal relating to the rearward traveling or a signal relating to stop from the forward and rearward switching device while outputting the command signal relating to the lifting operation of the lift arm to the lift arm solenoid control valve, output the command signal relating to the full tilt operation of the bucket to the bucket solenoid control valve.
